(19) Europäisches Patentamt
European Patent Office
Office européen des brevets

(11) EP 4 635 611 A1

(12) # EUROPEAN PATENT APPLICATION
published in accordance with Art. 153(4) EPC

(43) Date of publication:
**22.10.2025 Bulletin 2025/43**

(21) Application number: **23903527.2**

(22) Date of filing: **13.12.2023**

(51) International Patent Classification (IPC):
***B01D 69/12*** *(2006.01)* ***B01D 69/02*** *(2006.01)*
***B01D 69/08*** *(2006.01)* ***B01D 71/10*** *(2006.01)*
***B01D 71/38*** *(2006.01)* ***B01D 71/44*** *(2006.01)*
***B01D 71/68*** *(2006.01)*

(52) Cooperative Patent Classification (CPC):
**B01D 69/02; B01D 69/08; B01D 69/12;
B01D 71/10; B01D 71/38; B01D 71/44; B01D 71/68**

(86) International application number:
**PCT/JP2023/044568**

(87) International publication number:
**WO 2024/128243 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 JP 2022201185**

(71) Applicant: **Toyobo Co., Ltd.**
**Kita-ku**
**Osaka-shi, Osaka 530-0001 (JP)**

(72) Inventors:
- **SHIMAZU, Jumpei**
  **Otsu-shi, Shiga 520-0292 (JP)**
- **YAMAMURA, Yasufumi**
  **Otsu-shi, Shiga 520-0292 (JP)**

(74) Representative: **Vossius & Partner**
**Patentanwälte Rechtsanwälte mbB**
**Siebertstrasse 3**
**81675 München (DE)**

(54) ## POROUS MEMBRANE AND PURIFICATION METHOD

(57) A porous membrane having a structure that is non-uniform in a thickness direction, the structure comprising a first surface that is less dense and a second surface that is more dense, wherein the porous membrane has a first trap layer (a trap layer for 20-nm gold colloids), the first trap layer is a layer that traps gold colloids having an average particle size of 20 nm at the time when the gold colloids having an average particle size of 20 nm are made to permeate through the porous membrane from the first surface toward the second surface, and the first trap layer has a thickness of 16.5 μm or more.

FIG.5A

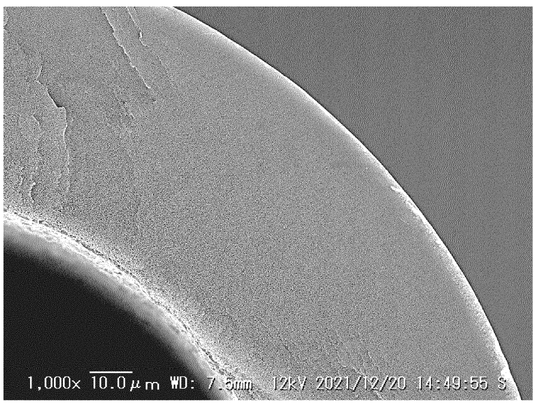


EP 4 635 611 A1

Processed by Luminess, 75001 PARIS (FR)

## Description

TECHNICAL FIELD

The present invention relates to a porous membrane and a purification method.

BACKGROUND ART

At the time of producing antibody pharmaceuticals, for example, in a step to remove foreign matter and the like from cultured cells to purify antibodies (such as IgG), a porous membrane is used for removing viruses. A porous membrane of this type is demanded to have a structure capable of removing viruses by fractionation while allowing permeation of antibodies.

For example, Japanese Patent No. 5403444 (Japanese Patent Laying-Open No. 2014-097465 (PTL 1)) discloses a porous membrane for use to remove viruses from a biological-origin material such as blood.

The porous membrane (porous hollow fiber membrane) disclosed by PTL 1 contains a polysulfone-based polymer as well as a vinylpyrrolidone-vinyl acetate copolymer, and its surface and porous portions are covered with a cellulose-based polymer and the like (polysaccharides or polysaccharide derivatives).

CITATION LIST

PATENT LITERATURE

PTL 1: Japanese Patent No. 5403444 (Japanese Patent Laying-Open No. 2014-097465)

SUMMARY OF INVENTION

TECHNICAL PROBLEM

Usually, prior to virus removal treatment, virus inactivation treatment is carried out. Virus inactivation treatment inactivates viruses by, for example, lowering the pH of the liquid that contains a biological-origin material. It is known that virus-removal performance of a porous membrane is poor for the low-pH liquid that contains a biological-origin material.

For this reason, conventionally, virus removal treatment with a porous membrane is carried out after neutralizing and raising the pH of the low-pH liquid containing a biological-origin material resulting from virus inactivation treatment.

However, from the viewpoint of production efficiency, it is desirable to carry out virus removal treatment of the low-pH liquid containing a biological-origin material without the above-mentioned neutralization treatment.

Hence, the present invention aims at providing a porous membrane that has high virus-trapping performance to allow virus removal treatment of a low-pH liquid containing a biological-origin material to be performed without extra treatment and that maintains a high filtration flow rate for a prolonged period of time.

SOLUTION TO PROBLEM

(1) A porous membrane having a structure that is non-uniform in a thickness direction, the structure comprising a first surface that is less dense and a second surface that is more dense, wherein

the porous membrane has a first trap layer (a trap layer for 20-nm gold colloids),
the first trap layer is a layer that traps gold colloids having an average particle size of 20 nm at the time when the gold colloids having an average particle size of 20 nm are made to permeate through the porous membrane from the first surface toward the second surface, and
the first trap layer has a thickness of 16.5 μm or more.

(2) The porous membrane according to (1), wherein

the porous membrane has a second trap layer,
the second trap layer is a layer that traps gold colloids having an average particle size of 30 nm at the time when the gold colloids having an average particle size of 30 nm are made to permeate from the first surface toward the second surface, and

the porous membrane satisfies a relationship of a/b=1.5 or more, where
a is a distance between the first surface and a position at the first trap layer closest to the second surface, and
b is a distance between the first surface and a position at the second trap layer closest to the second surface.

(3) The porous membrane according to (1) or (2), wherein

the porous membrane contains a hydrophobic polymer and a first hydrophilic polymer, and
a surface of the porous membrane is covered with a second hydrophilic polymer.

(4) The porous membrane according to (3), wherein the hydrophobic polymer is a polysulfone-based polymer.
(5) The porous membrane according to (3) or (4), wherein the first hydrophilic polymer is at least one of polyvinylpyrrolidone and vinylpyrrolidone-vinyl acetate copolymer.
(6) The porous membrane according to any one of (3) to (5), wherein the second hydrophilic polymer is a cellulose-based polymer.
(7) The porous membrane according to any one of (1) to (6), in a form of a hollow fiber membrane, wherein an inner surface of the hollow fiber membrane is the first surface and an outer surface of the hollow fiber membrane is the second surface.
(8) The porous membrane according to any one of (1) to (7), for virus removal.
(9) A purification method using the porous membrane according to any one of (1) to (8).

## ADVANTAGEOUS EFFECTS OF INVENTION

The present invention makes it possible to provide a porous membrane that has high virus-trapping performance to allow virus removal treatment of a low-pH liquid containing a biological-origin material to be performed without extra treatment and that maintains a high filtration flow rate for a prolonged period of time.
Degradation of virus-removal performance of a porous membrane for a low-pH liquid occurs as a result of, for example, collapse of the conformation of viruses in a low-pH liquid, which allows the resulting linear-form viruses to easily pass through the pores of the porous membrane. The porous membrane according to the present invention has a first trap layer (a trap layer for 20-nm gold colloids; a portion with relatively small pores) having a thickness of 16.5 μm or more, and is thereby capable of trapping the above-mentioned viruses that can otherwise easily pass; therefore, it is conceivable that the porous membrane according to the present invention is capable of performing virus removal treatment of a low-pH liquid without extra treatment.

## BRIEF DESCRIPTION OF DRAWINGS

Fig. 1 is a schematic view for explaining an example of a method of producing a porous membrane.
Fig. 2 is a schematic view for explaining deep bed filtration.
Fig. 3 is a schematic view for explaining surface filtration.
Fig. 4 is a schematic view for explaining dead-end filtration in respective measurement methods.
Fig. 5A is an SEM image of a cross section of the porous membrane of Example 1.
Fig. 5B is a binarized image of a cross section of the porous membrane of Example 1, binarized with respect to 20-nm gold colloids.
Fig. 6 is an SEM image of a cross section of the porous membrane of Example 4.

## DESCRIPTION OF EMBODIMENTS

In the following, a description will be given of embodiments of the present invention, but the scope of the present invention is not limited to these embodiments.

### <Porous Membrane>

### [Material of Porous Membrane]

A porous membrane according to the present embodiment contains a hydrophobic polymer and a first hydrophilic polymer.
The surface of the porous membrane (including the inner surfaces of the pores) is covered with a second

hydrophilic polymer.

The porous membrane may be prepared by, for example, making a second hydrophilic polymer (a type of hydrophilic polymer different from the first hydrophilic polymer) adsorbed (adhered) and fixed on the surface of a base membrane containing the hydrophobic polymer and the first hydrophilic polymer (including the inner surfaces of the pores). For example, the base membrane is made of a blend polymer composed of the hydrophobic polymer and the first hydrophilic polymer which are compatible with each other, and may be produced from a solution dissolved in a common solvent for both polymers.

(Hydrophobic Polymer)

Examples of the hydrophobic polymer include polysulfone-based polymers such as polysulfone and polyethersulfone, cellulose-based polymers such as cellulose acetate and cellulose derivatives, and polyolefin-based polymers such as polyethylene.

Polyethersulfone is a compound that contains a structural unit represented by a formula (1) below.

[Chem. 1]

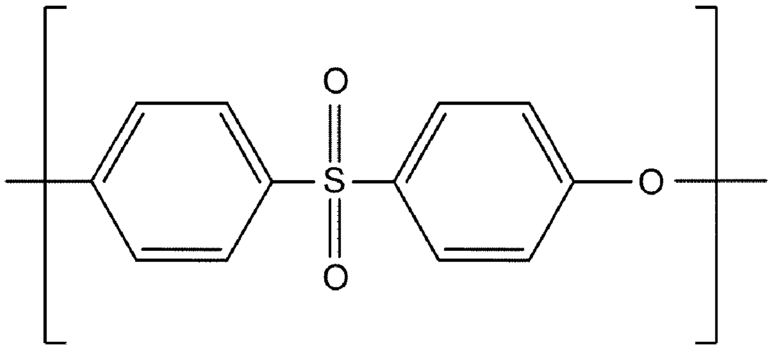

(1)

Specific examples of the polyethersulfone include Ultrason (registered trademark) E2020P and E6020P manufactured by BASF, as well as SUMIKAEXCEL (registered trademark) 3600P, 4100P, 4800P, 5200P, and 7600P manufactured by Sumitomo Chemical, and preferable are E6020P, 4800P, and 5200P. These may be used singly or in combination.

The polysulfone-based polymer is a material that is advantageous for obtaining a membrane with high water permeability and suitable for forming uniform membranes, asymmetric membranes, and the like. The polysulfone-based polymer may include a substituent such as a functional group and an alkyl group, and hydrogen atoms of its hydrocarbon skeleton may be substituted by other atoms such as halogens and by substituents. Preferably, only one type of the polysulfone-based polymer is used, and, preferably, its molecular weight is relatively high.

The content rate of the hydrophobic polymer in the entire porous membrane is preferably from 60 to 90 mass%.

(First Hydrophilic Polymer)

Examples of the first hydrophilic polymer include polyvinyl alcohol, polyethylene glycol, vinylpyrrolidone-based polymers (such as polyvinylpyrrolidone and vinylpyrrolidone-vinyl acetate copolymers), polyacrylic acid, cellulose, methylcellulose, chitosan, and the like. The vinylpyrrolidone-based polymer is a polymer composed of monomers that contain at least N-vinylpyrrolidone.

Preferably, the vinylpyrrolidone-based polymer contains a structural unit represented by a formula (2) below.

[Chem. 2]

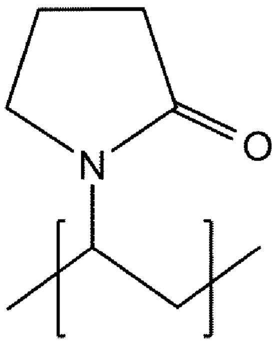

(2)

Examples of the vinylpyrrolidone-based polymer include Kollidon (registered trademark) 30 and 90 and Luvitec (registered trademark) K30, K80, K85, K90, and VA64, all of which are commercially available from BASF.

As the vinylpyrrolidone-vinyl acetate copolymer, a copolymer composed of vinylpyrrolidone as a hydrophobic unit and vinyl acetate as a hydrophilic unit is used (which may be abbreviated as a VA copolymer hereinafter). Preferably, the VA copolymer is a copolymer composed of vinylpyrrolidone and vinyl acetate in a weight ratio of 6:4 (which may be abbreviated as VA6/4 hereinafter) and/or VA65/35 in which the weight ratio is 65:35, from the viewpoints of hydrophilicity to be imparted to the polysulfone-based membrane, high compatibility with the polysulfone-based polymer, and the like.

The content rate of the first hydrophilic polymer in the porous membrane is preferably from 5 to 15 mass%, more preferably from 6 to 10 mass%.

When the content rate of the first hydrophilic polymer in the membrane is above the above-mentioned upper limit, swelling thereof in the membrane becomes significant, and thereby the pore size may become less stable and the pressure resistance may become degraded to the point where the influence on virus trapping and protein permeability is impossible to ignore. Furthermore, when the content rate of the first hydrophilic polymer in the membrane is too high, inconvenient events may occur such as the first hydrophilic polymer eluting during use and mixed in the recovered liquid. When the content rate is below the above-mentioned lower limit, its contribution to membrane structure control may become insufficient, and possibly as a result of this, virus-removal capability may become degraded.

The content rate of the first hydrophilic polymer and the second hydrophilic polymer can be measured by nuclear magnetic resonance (which may be abbreviated as NMR hereinafter). Moreover, the content rate near the surface of the membrane can be measured by surface infrared spectrometry (which may be abbreviated as IR hereinafter).

(Second Hydrophilic Polymer)

The second hydrophilic polymer is a polysaccharide or a polysaccharide derivative. Preferably, the second hydrophilic polymer is a cellulose-based polymer.

Preferably, the cellulose-based polymer is a hydroxyalkyl cellulose. Examples of the hydroxyalkyl cellulose include hydroxyethylcellulose, hydroxypropylcellulose (HPC), and the like.

Examples of polysaccharides other than cellulose-based ones include starch, dextran, curdlan, and the like.

The weight average molecular weight of the second hydrophilic polymer is preferably 140,000 or less, for the purpose of avoiding a rise of the viscosity of the solution and also from the viewpoint of efficiency of entering into the membrane. It is also preferable to lower the molecular weight as appropriate in accordance with the target pore size of the membrane.

In the present embodiment, it is preferable to firstly produce a base membrane containing the hydrophobic polymer and the first hydrophilic polymer, and then making the second hydrophilic polymer adhered to the surface of the base membrane by, for example, immersing the base membrane in a solution or a dispersion containing the second hydrophilic polymer. In this case, before making the second hydrophilic polymer adhered to the surface of the membrane and also to the surfaces of the pores, it is preferable to rinse the polysulfone-based membrane containing the first hydrophilic polymer to remove excess first hydrophilic polymer.

Covering the polysulfone-based membrane containing the first hydrophilic polymer with the second hydrophilic polymer is effective for maintaining stability and high hydrophilicity and also for reducing elution of the first hydrophilic polymer.

The ratio (in weight; IR/NMR) of the content rate (IR) of the second hydrophilic polymer near the outer surface measured by IR to the content rate (NMR) of the same in the entire membrane measured by NMR is preferably from 0.90 to 1.10, more preferably from 0.93 to 1.05.

The content rate of the second hydrophilic polymer in the entire porous membrane is preferably from 0.5 to 2.5

mass%, more preferably from 0.7 to 2.2 mass%.

When the content rate of the second hydrophilic polymer (such as the cellulose-based polymer) in the porous membrane is above the above-mentioned upper limit, due to saturated hydrophilicity of the membrane, the second hydrophilic polymer ends up being present in excess. When it is present in excess, it becomes swollen in the pores to clog the pores to possibly impair water permeability and protein permeability. When the content rate is below the above-mentioned lower limit, adsorption of the hydrophilicity-imparting protein may occur, and thereby the amount of protein solution that can be treated may markedly decrease. Covering with the second hydrophilic polymer is also effective for reducing elution of the first hydrophilic polymer. Herein, the content rate of the cellulose-based polymer as the second hydrophilic polymer may be measured by NMR as the content rate in the entire membrane.

[Structure, Etc. of Porous Membrane]

A porous membrane according to the present embodiment is structurally non-uniform in the thickness direction (namely, it has an asymmetric structure). Examples of a porous membrane having an asymmetric structure include porous membranes in which the density, porosity, cross-sectional aperture rate, average pore size, and/or the like vary in the thickness direction.

The porous membrane having an asymmetric structure according to the present embodiment may be in the form of a flat membrane, or may be in the form of a hollow fiber membrane. Preferably, it is structurally less dense on a first surface side of a cross section of the porous membrane (a transverse section, a cross section in the thickness direction) and more dense on a second surface side.

For example, the porous membrane according to the present embodiment has an asymmetric structure where the upstream side at the time of use (filtration) in virus removal treatment and the like (the first surface side) is less dense than the downstream side (the second surface side). In other words, filtration is preferably performed by passing the treatment-target liquid from the less dense side (the first surface side) toward the more dense side (the second surface side).

When the porous membrane is a hollow fiber membrane, the structure may be either less dense on the inner surface side and more dense on the outer surface side (having a dense layer on the outer surface side), or more dense on the inner surface side (having a dense layer on the inner surface side) and less dense on the outer surface side, preferably less dense on the inner surface side and more dense on the outer surface side (having a dense layer on the outer surface side).

For example, when the inner surface (the first surface) side of the hollow fiber membrane is regarded as the filtration upstream side and filtration is carried out from the inner side toward the outer side, it is preferable that the hollow fiber membrane be less dense on the inner surface side and more dense on the outer surface side.

A structure of this type moderately disturbs the flow of the filtration-target liquid and effectively interferes with adsorption of clogging-causing components such as aggregates onto the surface of the membrane. This makes it possible to ease the degradation of the filtration speed (which can occur due to clogging at the inner surface of the membrane), and thereby shorten the treatment time for a target liquid with relatively high concentration such as protein solution.

In the following, a description will be given of a filtration effect of the porous membrane having an asymmetric structure according to the present embodiment.

Referring to Fig. 3, in the case of filtration through a porous membrane 3, from the pushed side (the upper side in Fig. 3; the first surface side of the porous membrane; the inner surface side of a hollow fiber membrane), smaller components 5 in cell-containing culture medium such as antibodies (IgG) pass (permeate) through the pores of porous membrane 3 and become separated at the second surface side of the porous membrane (the lower side in Fig. 2; the outer surface side of a hollow fiber membrane). In contrast, among the components in the cell-containing culture medium, larger components 4 (such as viruses) that are larger than components 5 cannot pass through the pores of the porous membrane, to be removed from the filtrate.

As seen in Fig. 3, in the case of filtration through porous membrane 3 that is structurally uniform in the thickness direction (a conventional one) (surface filtration, screen filtration), larger components 4 tend to crowd and become deposited near the outermost surface on the pushed side of porous membrane 3 (the upper side in Fig. 3; the first surface side of the porous membrane (the inner surface side of a hollow fiber membrane)), and thereby clogging tends to occur.

In contrast, as seen in Fig. 2, in the case of filtration through porous membrane 3 having an asymmetric structure (according to the present embodiment) (deep bed filtration, depth filtration), larger components 4 disperse in the thickness direction of porous membrane 3 and become trapped (clogging occurs sequentially in the membrane thickness direction). Therefore, clogging tends not to occur.

Preferably, the hollow fiber membrane has an asymmetric structure where the most dense portion (the dense layer) in the cross-sectional direction of the membrane is at the outer side. The structure of the membrane can be easily checked by examination with an electron microscope, for example.

The hollow fiber membrane is used for a high-level removal of microscopic substances such as viruses, and is

therefore required to trap such microscopic substances somewhere at the membrane body with reliability. The trapping-target substances such as viruses become trapped while they are passing through the passageways in the membrane body made of the pores (this type of filtration is called deep bed filtration), and when a portion of the dense layer with smallest pores is positioned at the exit, almost 100% removal can be ensured.

If the dense layer is positioned at the entrance, trapping can occur there (which is called screen filtration), but in this case, trapping occurs locally at the entrance, and as a result, as filtration proceeds, the pores can become smaller and the trapped substances can become deposited, which can slow the permeation rate of the permeation-target solute and also, due to clogging, lower the amount of liquid that can permeate. For this reason, it is not preferable to position the dense layer at the entrance.

(Thickness of First Trap Layer)

Regarding the porous membrane according to the present embodiment, a layer that traps gold colloids having an average particle size of 20 nm at the time when the gold colloids having an average particle size of 20 nm are made to permeate through the porous membrane from the first surface side (the inner surface side) toward the second surface side (the outer surface side) is defined as a first trap layer. In other words, the porous membrane has a first trap layer. Similarly, a layer that traps gold colloids having an average particle size of 30 nm is defined a second trap layer (a trap layer for 30-nm gold colloids). Preferably, the porous membrane has a second trap layer.

The first trap layer (a trap layer for 20-nm gold colloids) has a thickness of 16.5 μm or more, preferably 17 μm or more. With this, the above-mentioned effect of the present invention is exhibited.

Preferably, the ratio of the thickness of the first trap layer to the thickness of the entire porous membrane is from 10 to 55%, more preferably from 25 to 45%.

Regarding the porous membrane according to the present invention, the logarithmic reduction value (LRV) as an index of the virus-trapping performance (removal performance) is preferably 3.5 or more, more preferably 4.0 or more (at least 99.99% removal rate), further preferably 4.7 or more.

For example, "LRV≥5" means that the number of viruses that leak out into the filtrate is one or less at the time when a liquid containing $10^5$ viruses (100000 viruses) is filtrated. Thus, the higher the LRV of the porous membrane is, the higher the trapping performance (removal performance) of the porous membrane is with respect to the filtration target (such as viruses).

It is widely known that an LRV of around 4 is preferable in terms of safety (Reference Document: ODA Masahiro et al., "Issue and Case Study for Virus Clearance Study", A PDA Journal of GMP and Validation in Japan, Vol.7, No.1, 2005), and it is conceivable that a hollow fiber membrane module with an LRV of 4.7 or more has good virus-removal performance.

It should be noted that the smallest virus present in the natural world is parvovirus, which has a diameter of about 20 nm. Hence, permeability with respect to the above-mentioned 20-nm gold colloids may serve as an index of virus permeability (trapping capability).

The average particle size of the above-mentioned gold colloids refers to the average particle size described on written instructions and the like of the gold colloid product.

(Ratio a/b)

With the distance between the first surface of the porous membrane and a position at the first trap layer (the trap layer for 20-nm gold colloids) closest to the second surface being defined as a, as well as the distance between the first surface of the porous membrane and a position at the second trap layer (the trap layer for 30-nm gold colloids) closest to the second surface being defined as b, the ratio a/b is preferably 1.5 or more, more preferably 1.6 or more, further preferably 2.0 or more. In other words, the porous membrane preferably satisfies the relationship of a/b=1.5 or more. a is the distance between the first surface and a position at the first trap layer closest to the second surface. b is the distance between the first surface and a position at the second trap layer closest to the second surface.

In this case, over-time decrease of the filtration flow rate of the porous membrane is eased. It may be because the greater the distance between the trap layer for 30-nm gold colloids (the position closest to the outer layer) and the trap layer for 20-nm gold colloids (the position closest to the outer layer) is (namely, the greater the ratio a/b is), the thicker the layer susceptible to clogging is and thereby the more time the clogging of the pores of the porous membrane by foreign matter takes, which can ease the over-time decrease of the filtration flow rate. As a result, degradation of throughput of virus removal treatment can be eased and pre-clogging throughput can be enhanced.

The thickness (the membrane thickness) of the porous membrane is preferably from 30 to 200 μm, more preferably from 40 to 100 μm. The membrane thickness of the hollow fiber membrane can be calculated by "((Outer diameter)-(Inner diameter))/2".

In the case of a hollow fiber membrane, the inner diameter is preferably from 150 μm to 400 μm, more preferably from 200 μm to 350 μm.

In the case of a hollow fiber membrane, the hollow rate is preferably from 15 to 60%, more preferably from 20 to 50%. The hollow rate is the proportion of the area of hollow portions in a transverse section of the hollow fiber membrane, and it is represented by "(Cross-sectional area of hollow portions)/((Cross-sectional area of membrane portion)+(Cross-sectional area of hollow portions))×100 (%)". When the hollow rate falls within the above-mentioned range, filtration performance and strength to withstand filtration pressure can be both obtained.

Preferably, the porosity of the porous membrane is from 70% to 95%, more preferably from 85% to 95%, further preferably from 90% to 95%. When the porosity is set at 70% or more, the recovery rate for antibodies (such as IgG) can be enhanced. On the other hand, when the porosity is too high, the porous membrane may not have enough strength. With the porosity being set within the above-mentioned range, filtration performance and strength to withstand filtration pressure can be both obtained. For example, the porosity of the porous membrane can be calculated from the mass of water at the time when the pore portions of the porous membrane are filled with water, as well as from the dry mass of the porous membrane.

The rate of permeation of pure water through the porous membrane at 25°C (hereinafter simply called pure water Flux) is preferably from 50 to 500 L/($m^2$·h·bar). When the pure water Flux is below this range, filtration takes longer and a large membrane area is required, among others, to make efficient treatment difficult to achieve. When the pure water Flux is above the range, the following problems can occur: due to the too-large pore size, high-level separation and removal of removal-target substances such as viruses is difficult to perform; and due to the low strength of the membrane, handling becomes less easy. More preferably, the pure water Flux is from 80 to 400 L/($m^2$·h·bar), further preferably from 100 to 350 L/($m^2$·h·bar).

(Purpose of Use)

The porous membrane according to the present embodiment can be used for purification of a target liquid by virus removal (a purification method), for example. In other words, the porous membrane according to the present embodiment is for virus removal. The porous membrane according to the present embodiment can be suitably used at the time of producing antibody pharmaceuticals, for example, in a step to remove foreign matter and the like from cell-containing culture medium to purify antibodies (such as IgG), for removing viruses and the like contained in the cell-containing culture medium.

Preferably, from the viewpoint of the durability of the hollow fiber membrane to withstand the pressure applied during filtration, the inner surface side of the hollow fiber membrane is used as the filtration upstream side to carry out filtration from the inner side toward the outer side. Moreover, for the sake of easy and simple operation, the mode of filtration is preferably dead-end filtration.

<Method of Producing Porous Membrane (Hollow Fiber Membrane)>

In the following, a description will be given of a method of producing a hollow fiber membrane, which is an example of the above-described porous membrane.

A method of producing a hollow fiber membrane according to the present embodiment comprises the following steps in this order:

a spinning step that involves discharging a spinning dope and an internal liquid through a double-tube nozzle via an air gap into a coagulation liquid, allowing the spinning dope to become coagulated in the coagulation liquid, and pulling out the coagulated spinning dope from the coagulation liquid to obtain a hollow fiber membrane; and

a covering step that involves covering the surface of the hollow fiber membrane (the porous membrane) (where the surface includes the inner surfaces of the porous portions) with a second hydrophilic polymer.

[Spinning Step]

Referring to Fig. 1, in the spinning step, a spinning dope 10a and an internal liquid 10b are discharged through a double-tube nozzle 11 via an air gap 20 into a coagulation liquid 21, allowing the spinning dope to become coagulated in coagulation liquid 21, and then the coagulated spinning dope is pulled out from coagulation liquid 21 to obtain a hollow fiber membrane. The pulling-out of the hollow fiber membrane, etc. is performed with the use of in-liquid guides 12, 13 and rollers 14, 15, 16, for example. After pulled out from coagulation liquid 21, the hollow fiber membrane is immersed in a water bath 22 and then taken up on a take-up apparatus 23, for example.

Nozzle 11 has a double-tube form, and comprises an outer tube, and an inner tube provided on the inner side of the outer tube. The spinning dope is discharged through the gap (a slit) between the outer tube and the inner tube, and the internal liquid is discharged from inside the inner tube. The inner diameter of the outer tube is preferably from 500 to 1500 μm, more preferably from 600 to 1200 μm. The outer diameter of the inner tube is preferably from 150 to 700 μm, more

preferably from 150 to 600 μm. The outer diameter of the inner tube is preferably approximately the same as the inner diameter of the hollow fiber membrane.

The straight-line length of air gap 20 (the distance between the tip of nozzle 11 and the liquid level of coagulation liquid 21), which is called an air gap length (AG length), is preferably from 10 to 100 mm, more preferably from 10 to 80 mm.

The hollow fiber membrane obtained by the spinning step may be further subjected to a step of rinsing with pure water (a water rinse step). In the water rinse step, water is made to flow preferably in the opposite direction to the movement of the hollow fiber membrane (a countercurrent), but alternatively, it may be made to flow in the same direction as the movement of the hollow fiber membrane (a parallel current).

(Spinning Dope)

Spinning dope 10a contains the above-mentioned resin raw material containing a polysulfone-based polymer and a vinylpyrrolidone-based polymer, a solvent, and a non-solvent, for example.

The spinning dope (a membrane-forming solution) may be obtained by mixing, stirring, and dissolving the above-mentioned components. For dissolution, heating may be carried out. It should be noted that excessive heating can cause degradation of the polymers and high-temperature phase separation of the spinning solution (the latter is unique to the present invention), and therefore, the heating temperature is preferably from 30 to 80°C. Moreover, preparation of the spinning dope is preferably carried out in an enclosure with inert gas.

The temperature at which nozzle 11 discharges the spinning dope (the nozzle temperature) is preferably from 40 to 80°C, more preferably from 45 to 60°C. When the temperature of the nozzle is low, coagulation tends to be facilitated to make the membrane structure too dense, which can result in degradation of permeability. When the temperature of the nozzle is high, phase separation can be excessively inhibited from proceeding and thereby large pores tend to be formed, which can highly possibly cause degradation of separation properties and/or strength.

The concentration of the polysulfone-based polymer in the spinning dope is preferably from 20 to 40 mass%, more preferably from 25 to 35 mass%. Although it is preferable that the concentration of the polysulfone-based polymer be low for the sake of high permeability, if it is too low, strength can be degraded and/or separation properties can be impaired. However, for reliably trapping microscopic substances such as viruses, it is necessary to set the porosity of the dense layer as low as possible to ensure the trapping capability as reliably as possible. For the latter reason, it is preferable that the concentration of the polysulfone-based polymer be as high as possible. However, when the concentration of the polysulfone-based polymer is set high, the entire membrane structure can become too dense even when the membrane-forming conditions are well controlled. In addition, when the concentration of the polysulfone-based polymer is too high, the spinning dope can become too viscous and thereby spinning can become difficult to perform.

The concentration of the vinylpyrrolidone-based polymer in the spinning dope is preferably from 0.5 to 20 mass%, more preferably from 1 to 15 mass%. When the concentration is low, due to insufficient control of the membrane structure and due to insufficient amount of the polymer remaining in the membrane, performance can become degraded. On the other hand, when the concentration is high, phase separation (coagulation) of the spinning dope tends to proceed excessively, and thereby operational qualities in the production of the hollow fiber membrane can become impaired (filter filtration of the spinning dope may not proceed well, and/or fibers can become broken) and, also, diffusion of the polymers during phase separation can become greatly reduced, and as a result, a desired membrane structure may not be formed.

The solvent is a liquid in which the polysulfone-based polymer is soluble. Preferably, the solvent is a polar solvent, preferably soluble in water. The polar solvent is preferably an aprotic polar solvent. Examples of the aprotic polar solvent include N-methyl-2-pyrrolidone (NMP), N,N-dimethylformamide (DMF), N,N-dimethylacetamide (DMA), dimethyl sulfoxide (DMSO), acetonitrile, ε-caprolactam, and the like. NMP, DMF, DMAc, and the like are particularly preferable, and NMP is further preferable.

The non-solvent is a liquid (except water) in which the polysulfone-based polymer is insoluble. The non-solvent may be glycol ester, glycerol, alcohol, and/or the like, for example, and it is preferably glycol ester. Examples of the glycol ester include ethylene glycol (EG), diethylene glycol (DEG), triethylene glycol (TEG), polyethylene glycol (PEG; such as polyethylene glycol 200 and polyethylene glycol 400), propylene glycol (PG), glycerol, water, and the like.

In the case where both the polysulfone-based polymer and the vinylpyrrolidone-based polymer are used, an ether polyol such as DEG, TEG, and/or PEG is preferable, and TEG is further preferable. Herein, the ether polyol means a substance that has at least one ether bond and two or more hydroxy groups in the structure.

In the spinning dope, the ratio of the mass of the solvent (S) to that of the non-solvent (NS) (the S/NS ratio) is preferably from 25/75 to 55/45, more preferably from 40/60 to 50/50. When the content of the solvent is below this range, coagulation tends to be facilitated to make the membrane structure too dense, which can result in degraded permeability to make it impossible to obtain the desired Flux and the desired protein permeation rate. On the other hand, when the content of the solvent is above the above-mentioned range, phase separation becomes excessively inhibited from proceeding and thereby large pores tend to be formed, which can highly possibly give rise to unfavorable events such as degradation of separation properties and/or strength.

At the time of mixing the resin raw material which is the material of the hollow fiber membrane, the solvent, and the non-solvent, the order to add the materials and the method for mixing them are not particularly limited.

(Internal Liquid)

Regarding the composition of the internal liquid, it is preferable to use a liquid predominantly composed of the solvent and/or the non-solvent contained in the spinning dope. However, when the solvent contained in the spinning dope is used alone, coagulation at the inner wall is excessively inhibited, and thereby it is impossible to obtain a preferable surface structure. Therefore, it is preferable to use one of the following: a mixed liquid of the solvent and the non-solvent, the non-solvent alone, a mixed liquid of the solvent and water, a mixed liquid of the non-solvent and water, and a mixed liquid of the solvent, the non-solvent, and water.

When the internal liquid (bore liquid) contains water, the content rate of water in the internal liquid is preferably from 5 to 30 mass%, more preferably from 10 to 25 mass%. When the content of organic components is low, coagulation tends to be facilitated to make the inner-side structure of the membrane too dense, which can result in degradation of permeability.

The internal liquid may contain a solvent, a non-solvent, and/or the like. Examples of the non-solvent include ethylene glycol, triethylene glycol (TEG), polyethylene glycol 200 or 400, glycerol, propylene glycol, and the like. Examples of the solvent include N-methylpyrrolidone (NMP), dimethylacetamide, dimethylformamide, dimethyl sulfoxide, and the like.

When the internal liquid has a low content rate of water and a high content rate of the solvent, coagulation on the inner side of the hollow fiber membrane proceeds slowly and phase separation takes long, and, thereby, the inner side of the hollow fiber membrane becomes less dense. On the other hand, when the content rate of water is high and the content rate of the solvent is low, coagulation on the inner side of the hollow fiber membrane proceeds fast and phase separation does not take long, and, thereby, the inner side of the hollow fiber membrane becomes more dense.

For obtaining the hollow fiber membrane according to the present embodiment that is less dense on the inner side of the membrane, it is preferable to increase the concentration of the components, except water, contained in the internal liquid (such as the solvent and/or the non-solvent) (the internal liquid concentration). The internal liquid concentration is preferably from 70 to 95 mass%, more preferably from 75 to 90 mass%. The ratio of the mass of the solvent to that of the non-solvent in the internal liquid (solvent/non-solvent) is from 40/60 to 50/50, for example.

At the time of discharging spinning dope 10a and internal liquid 10b through double-tube nozzle 11, the temperature of the spinning dope may be set to be different from that of the internal liquid.

(Coagulation Liquid)

The coagulation liquid preferably contains a solvent and a non-solvent. Each of the solvent and the non-solvent may be either one type or a mixture of a plurality of types. When the content rate of the solvent is too high, coagulation on the outer side of the hollow fiber membrane proceeds slowly and phase separation takes long, and, thereby, the outer side of the hollow fiber membrane becomes less dense. On the other hand, when the content rate of the solvent is too low, coagulation on the outer side of the hollow fiber membrane proceeds fast and phase separation does not take long, and, thereby, the outer side of the hollow fiber membrane becomes more dense. For obtaining the hollow fiber membrane according to the present embodiment that is more dense on the outer side of the membrane, the proportion of the sum of the solvent and the non-solvent in the coagulation liquid (the concentration of the coagulation liquid) is preferably from 20 to 60 mass%, more preferably from 30 to 45 mass%. The ratio of the mass of the solvent to that of the non-solvent in the coagulation liquid (solvent/non-solvent) is from 40/60 to 50/50, for example.

Moreover, the temperature of the coagulation liquid also greatly affects the coagulation time of the membrane. When the temperature of the coagulation liquid is high, coagulation on the outer side of the hollow fiber membrane proceeds slowly and phase separation takes long, and, thereby, the outer side of the hollow fiber membrane becomes less dense. On the other hand, when the temperature of the coagulation liquid is low, coagulation on the outer side of the hollow fiber membrane proceeds fast and phase separation does not take long, and, thereby, the outer side of the hollow fiber membrane becomes more dense. For obtaining the hollow fiber membrane according to the present embodiment that is more dense on the outer side of the membrane, the temperature of the coagulation liquid is preferably from 30 to 70°C, more preferably from 40 to 60°C.

When the speed of coagulation on the outer side of the hollow fiber membrane attributable to the concentration and the temperature of the coagulation liquid is faster than the speed of coagulation on the inner side of the hollow fiber membrane attributable to the internal liquid concentration, the inner surface side becomes less dense and the outer surface side becomes more dense. When the speed of coagulation on the outer side of the membrane is too fast relative to that on the inner side, the outer side of the membrane becomes too dense, and thereby permeation of useful components such as IgG can be excessively inhibited, and/or the layer susceptible to clogging can become thinner to likely cause over-time decrease of the filtration amount. In contrast, when it is slow, the pores on the outer side of the membrane become larger and/or the virus-trapping layer becomes less thick, and thereby trapping-target foreign matter such as viruses is allowed to permeate, and if it is too slow, the inner surface side becomes more dense and the outer surface side becomes less dense, and, thereby, the liquid cannot enter into the membrane from the inner surface side of the membrane. Therefore, for obtaining the hollow fiber membrane according to the present embodiment having an asymmetric structure where the inner surface side is less dense and the outer surface side is more dense and that is capable of trapping foreign matter while allowing permeation of useful components, the balance in concentration and temperature between the internal liquid and the coagulation liquid is important.

After formed and rinsed, the hollow fiber membranes are cut into a proper length and tied into a bundle. For removal of the internal liquid remaining in the hollow portions, the bundle is left to stand in an upright position for 30 minutes to 2 hours.

After the internal liquid is removed, the bundle is subjected to an additional rinsing step, where warm water is injected into the upright-positioned bundle from the bottom of the bundle to soak the bundle with the water, and then the water is discharged; this procedure is repeated to completely remove the solvent and the non-solvent from the inner side and the outer side of the hollow portions and also from inside the hollow fiber membranes. The temperature of the warm water is preferably from 70°C to 95°C, more preferably from 75°C to 90°C.

After the above-described rinsing treatment, the hollow fiber membrane is preferably treated with high-pressure hot water. More specifically, the hollow fiber membrane is preferably set into a high-pressure steam sterilization apparatus, in a state of being immersed in water, and treated under ordinary conditions for high-pressure steam sterilization with a treatment temperature of 120 to 150°C for a treatment time of 20 to 120 minutes.

After the high-pressure hot water treatment, the hollow fiber membrane is dried and sent to a subsequent coating treatment step to be coated with a cellulose-based polymer.

For drying, a wide range of drying methods that are usually employed such as air drying, reduced-pressure drying, hot air drying, and microwave drying can be used. The temperature of hot air during hot air drying is preferably lower than the temperature in the above-mentioned hot-water heat treatment.

[Covering Step]

In the covering step, the surface of the hollow fiber membrane (the porous membrane) (including the inner surfaces of the porous portions) is covered with the second hydrophilic polymer.

For example, the hollow fiber membrane obtained in the above manner is then immersed in a covering solution that contains a lower alcohol aqueous solution in which a cellulose-based polymer (the second hydrophilic polymer) is dissolved, for allowing the cellulose-based polymer to adhere to the surface of the membrane including the pore surfaces. The lower alcohol may be ethanol, 2-propanol, and/or the like. The lower alcohol aqueous solution also contributes to rinsing of the hollow fiber membrane, making it possible to remove the vinylpyrrolidone-based polymer that was not removed by the above-mentioned high-pressure hot water treatment. In other words, use of the lower alcohol aqueous solution advantageously makes it possible to simultaneously carry out removal of excess vinylpyrrolidone-based polymer and coating treatment.

The covering solution is preferably an aqueous solution containing the cellulose-based polymer at 0.1 to 1.0 mass%, more preferably at 0.3 to 0.7 mass%, as well as 2-propanol at 10 to 30 mass%, more preferably at 15 to 25 mass%. When the concentration of the cellulose-based polymer is below the above-mentioned range, sufficient hydrophilicity cannot be imparted to the hollow fiber membrane. On the other hand, when it is above the above-mentioned range, the aqueous solution becomes more viscous, and thereby hydrophilicity may not be imparted uniformly throughout the entire membrane. With the lower alcohol concentration being regulated within the above-mentioned range, excessive falling-off of the VA copolymer due to the covering solution can be inhibited. The treatment time is not particularly limited as long as the hollow fiber membrane is immersed in the above-mentioned aqueous solution for about 30 minutes.

After the treatment, the hollow fiber membrane is taken out and immersed in warm water for heat treatment. When the this procedure is carried out under conditions at a reduced pressure lower than normal pressure by 0.06 to 0.08 MPa, the warm water can enter into the pores. This treatment makes it possible to stabilize the cellulose-based polymer covering. In the cellulose-based polymer in aqueous solution at normal temperature, hydroxy groups of cellulose form hydrogen bonding with water molecules and also between cellulose molecules, which means that the interaction with the covering-target base material is weak; therefore, by performing hot water treatment to cut the hydrogen bonds, and then causing conformational changes to occur to enhance interaction with the hydrophobic base material and the first hydrophilic polymer, followed by repositioning, it is possible to form stable covering. The temperature of the warm water is preferably from 60°C to 95°C, further preferably from 80°C to 95°C. The duration of immersion is preferably from 10 minutes to 90 minutes, further preferably from 30 minutes to 60 minutes. By subjecting the hollow fiber membrane thus obtained to another round of drying treatment under the above-mentioned conditions, it is possible to obtain the hollow fiber membrane according to the present embodiment.

[Examples]

In the following, a more detailed description will be given of the present invention by way of Examples, but these Examples are not intended to limit the scope of the present invention.

[Example 1]

Basically in the same manner as the method of producing a hollow fiber membrane described in the embodiment section, hollow fiber membranes (porous membranes) of Example 1 were produced. Specific production conditions and the like are described below.

(Preparation of Spinning Dope)

28.5 mass% of polyethersulfone (PES; Ultrason (registered trademark) 6020P manufactured by BASF), 9 mass% of polyvinylpyrrolidone (PVP; Kollidon VA64 manufactured by BASF), 28.125 mass% of N-methyl-2-pyrrolidone (NMP; manufactured by Mitsubishi Chemical), and 34.375 mass% of triethylene glycol (TEG; manufactured by Mitsubishi Chemical) were mixed together, and heated and dissolved into uniformity, to prepare a spinning dope. The resulting spinning dope was defoamed under reduced-pressure hermetically-sealed conditions.

(Preparation of Internal Liquid)

42.75 mass% of NMP (solvent), 52.25 mass% of TEG (non-solvent), and 5 mass% of water (RO water; water treated by reverse osmosis) were mixed together to prepare an internal liquid.

(Preparation of Coagulation Liquid)

26 mass% of NMP (solvent), 31 mass% of TEG (non-solvent), and 43 mass% of water (RO water) were mixed together to prepare a coagulation liquid.

(Coating Liquid)

7.5 mass% of 2-propanol (manufactured by Nacalai Tesque), 0.5 mass% of hydroxypropylcellulose (HPC; with a weight average molecular weight of 50000, manufactured by Nippon Soda), and 92 mass% of water (RO water) were mixed together to prepare a coating liquid.

<Spinning Step>

The spinning dope (membrane-forming solution) is discharged through the ringshaped portion of a double-tube nozzle (a tube-in-orifice nozzle), and at the same time, the internal liquid (bore liquid) is discharged through the central portion of the double-tube nozzle. Both liquids were taken up at a certain speed (spinning speed, take-up speed), and, thereby, they passed through a dry section (air gap 20) that was shut off from the outside air and then passed through coagulation liquid 21 and water bath 22.

At this time, the nozzle temperature (the discharge temperature) was set at 50°C. The air gap length was 10 mm. The spinning speed was 19 m/minute. It should be noted that the spinning speed is the speed of winding.

The temperature of the coagulation liquid was set at 30°C.

The temperature of the water bath was set at 55°C.

The fibers (hollow fiber membranes) pulled up from the coagulation liquid were rinsed in the water bath, and then wound on take-up apparatus 23 at a certain speed (the winding-up speed). The amounts of the dope and the internal liquid discharged from the nozzle were regulated so as to make the inner diameter of the hollow fiber membranes after the spinning step be 205 μm and the membrane thickness be 65 μm.

The fibers (the hollow fiber membranes) thus taken up were cut into a length of 40 cm, and 5000 hollow fiber membranes thus cut were tied to prepare a bundle. For removal of the internal liquid, the bundle was left to stand in an upright position for 30 minutes. Subsequently, the upright-positioned bundle was immersed in warm water at 85°C for rinsing treatment of the bundle. The rinsing treatment was repeated with the warm water replaced five times. Subsequently, the wet bundle was immediately immersed in warm water at 40°C in a high-pressure steam sterilization apparatus, and high-pressure hot water treatment was carried out under conditions at 140°C for 20 minutes. This was followed by microwave drying in a chamber set at a temperature of 35°C. The high-pressure steam treatment and drying were repeated three times in total.

<Step of Coating with Second Hydrophilic Polymer>

The surface of the hollow fiber membranes (including the inner surfaces of the pores) was coated with hydroxypropylcellulose (HPC; manufactured by Nippon Soda) used as a second hydrophilic polymer.

More specifically, the hollow fiber membrane bundle obtained in the above manner was immersed in the coating liquid in a vessel at 25°C. After the vessel was hermetically sealed, the pressure was rapidly reduced to -0.07 MPa, at which the vessel was left to stand for 20 minutes. After the pressure returned to normal pressure, the bundle was taken out, and left to stand in an upright position for 5 minutes for removal of the treatment liquid. Subsequently, the bundle was immersed in an upright position in RO water at 80°C for 1 hour for HPC gelation (insolubilization). This was followed by microwave drying in a chamber set at a temperature of 35°C.

In this way, a hollow fiber membrane bundle with its surface covered with HPC was obtained. The measured values of the inner diameter, the outer diameter, and the membrane thickness of the hollow fiber membranes as of after gelation and before drying (after spinning) and as of after drying were given in Table 2.

[Examples 2 to 5 and Comparative Examples 1 to 3]

In Examples 2 to 5 and Comparative Examples 1 to 3, at least one of the nozzle temperature, the composition ratio of the coagulation liquid, the membrane thickness of the hollow fiber membranes after the spinning step, and the like was changed from Example 1, as specified in Table 1 and Table 2. In Table 1, "%" means "mass%". For example, in Example 2 and Comparative Example 1, only the membrane thickness of the hollow fiber membranes after the spinning step was changed from Example 1. Except this, the same manner as in Example 1 was adopted to produce hollow fiber membranes of Examples 2 to 5 and Comparative Examples 1 to 3.

It should be noted that Comparative Examples 2 and 3 correspond to Examples 1 and 2 in PTL 1, respectively, and in Comparative Examples 2 and 3, Luvitec VA64 (manufactured by BASF) was used as the vinylpyrrolidone-based polymer in Examples 1 and 2 of PTL 1.

[Table 1]

<table>
<tr><th rowspan="2"></th><th colspan="4">Spinning dope</th><th colspan="3">Internal liquid</th><th rowspan="2">Nozzle temp. [°C]</th><th colspan="3">Coagulation liquid</th></tr>
<tr><th>PES [%]</th><th>PVP [%]</th><th>NMP [%]</th><th>TEG [%]</th><th>NMP [%]</th><th>TEG [%]</th><th>Water [%]</th><th>NMP [%]</th><th>TEG [%]</th><th>Water [%]</th></tr>
<tr><td>Ex. 1</td><td rowspan="6">28.5</td><td rowspan="6">9</td><td rowspan="6">28.125</td><td rowspan="6">34.375</td><td rowspan="7">42.75</td><td rowspan="7">52.25</td><td rowspan="7">5</td><td rowspan="2">50</td><td rowspan="2">26</td><td rowspan="2">31</td><td rowspan="2">43</td></tr>
<tr><td>Ex. 2</td></tr>
<tr><td>Ex. 3</td><td>48</td><td>26</td><td>31</td><td>43</td></tr>
<tr><td>Ex. 4</td><td>48</td><td>28</td><td>34</td><td>38</td></tr>
<tr><td>Ex. 5</td><td>52</td><td>28</td><td>34</td><td>38</td></tr>
<tr><td>Comp. Ex. 1</td><td>50</td><td>26</td><td>31</td><td>43</td></tr>
<tr><td>Comp. Ex. 2</td><td>27</td><td>9</td><td>28.8</td><td>35.2</td><td>50</td><td>27</td><td>33</td><td>40</td></tr>
<tr><td>Comp. Ex. 3</td><td>30</td><td>6</td><td>28.8</td><td>35.2</td><td>40.5</td><td>49.5</td><td>10</td><td>55</td><td>24.8</td><td>30.3</td><td>45</td></tr>
</table>

For each of the porous membranes (the hollow fiber membranes) of Examples and Comparative Examples, the below-specified items were measured. Results of the measurement are given in Table 2.

<Inner Diameter, Outer Diameter, and Membrane Thickness of Hollow Fiber Membranes>

The inner diameter (ID), the outer diameter (OD), and the membrane thickness (Δd) of the hollow fiber membranes (after drying) of Examples and Comparative Examples were measured by the methods described below.

A proper number of the hollow fiber membranes are drawn through a hole (diameter, 3 mm) that is made in the center of a slide glass, in a way that the hollow fiber membranes will not slide out of the hole, followed by cutting the hollow fiber membranes with a razor along the top face and the bottom face of the slide glass to obtain hollow fiber membrane cross section samples. For the hollow fiber membrane cross section samples thus obtained, with the use of a projector

(Nikon PROFILE PROJECTOR V-12), the inner diameter and the outer diameter of the hollow fiber membranes are measured.

More specifically, for one hollow fiber membrane cross section, the dimensions of the outer surface of the hollow fiber membrane in both the X-X direction and the Y-Y direction (two mutually-orthogonal directions in the cross section) were measured, and the arithmetic mean of them was defined as the outer diameter of the hollow fiber membrane cross section. Similarly, for one hollow fiber membrane cross section, the dimensions of the hollow portion in both the X-X direction and the Y-Y direction (two mutually-orthogonal directions in the cross section) were measured, and the arithmetic mean of them was defined as the inner diameter of the hollow fiber membrane cross section. This measurement was carried out for ten cross sections, and the average values were defined as the inner diameter and the outer diameter, respectively.

The membrane thickness (the average value) is calculated by "((Outer diameter)-(Inner diameter))/2", based on the results of measurement of the inner diameter and the inner diameter of the hollow fiber membranes (the average values).

<SEM Image>

By the procedure described below, an SEM image of a cross section of the hollow fiber membrane was obtained.

(1) The hollow fiber membrane was lightly rinsed with water, and the sample was frozen in liquid nitrogen and cut.
(2) The sample thus obtained was fixed to a sample platform in such a manner that the cut surface could be examined, followed by sputtering for carbon deposition.
(3) The sample after carbon deposition was examined with a scanning electron microscope (S-2500 manufactured by Hitachi) at an accelerating voltage of 10 kV, and thereby an SEM image was obtained.

An SEM image of a cross section of the porous membrane (hollow fiber membrane) of Example 1 is given in Fig. 5A. An SEM image of a cross section of the porous membrane (hollow fiber membrane) of Example 4 is given in Fig. 6. Fig. 5A and Fig. 6 show that each of the hollow fiber membranes of Example 1 and Example 4 has an asymmetric structure where the inner surface side is less dense and the outer surface side is more dense.

<Preparation of Hollow Fiber Membrane Module>

The hollow fiber membrane bundle was inserted into a tubular vessel, and both ends were hardened with an adhesive agent. The end portions were cut off, and thereby a module having a hollow fiber membrane bundle which was open at both ends of the hollow fiber membranes was obtained. The number of the hollow fiber membranes was determined as appropriate. At two positions on the round tubular face of the round tubular vessel, ports were provided for allowing fluid perfusion both outside and inside the hollow fiber membranes.

<Gold Colloids Filtration Test>

(Preparation of Gold Colloid Dispersion)

6 mL of a 20-nm gold colloid uniform liquid (manufactured by BBI Solutions; Gold Colloid) and 3 mL of a 2.0-mass% bovine serum albumin (manufactured by Nacalai Tesque; Albumin, Bovine Serum, F-V, pH5.2) aqueous solution were mixed together, and thereto, 3 mL of a 0.4-mass% glutathione (reduced type) aqueous solution (manufactured by Nacalai Tesque) was further added to prepare a 20-nm gold colloid dispersion. Separately, in the same manner, a 30-nm gold colloid dispersion was prepared.

(Filtration Test)

With the use of the hollow fiber membrane module prepared in the above manner, the gold colloid dispersion (either the 20-nm gold colloid dispersion or the 30-nm gold colloid dispersion) was subjected to dead-end filtration at a pressure of 1000 hPa for 5 minutes (see Fig. 4).

(Measurement of Thickness of Trap Layer for 20-nm Gold Colloids)

After the filtration test, the thickness of the layer for trapping 20-nm gold colloids (or 30-nm gold colloids) (the trap layer) of the hollow fiber membrane was measured in the below manner.

(1) The hollow fiber membrane (sample) after filtration was positioned so that an area of the membrane body (a cross section) spanning from the inner surface side to the outer surface side was to be included in a view under a microscope at a magnification of 100× 1000, and then an image of the cross section was acquired with an image size of 1600 pixels×1200 pixels. The cross-sectional image of Example 1 acquired with a microscope is given in Fig. 5B.
(2) The image thus acquired was binarized with binarization software (WinROOF 2013) by the procedure described below, and thereby the thickness of the gold-colloid trapping layer was determined.

a. The image was imported into the binarization software, and the "Monochrome image conversion" option was selected for image processing, to convert the cross-sectional image into black and white.
b. A rectangular area that included an area of the membrane body spanning from the inner surface side to the outer surface side was selected, with one side equal to or greater than the membrane thickness and the other side equal to 1 μm.
c. "Automatic binarization" was performed, and thereby a histogram was displayed with density values on the horizontal axis and pixel counts on the vertical axis.
d. The "Discrimination analysis" option was selected, to separate the binarized image (the histogram) of the cross section acquired with a microscope into peaks representing stained areas attributable to trapped gold colloids and peaks representing non-stained areas.
e. In the histogram, the width between the group of peaks representing stained areas attributable to gold colloids and the group of peaks representing non-stained areas was divided into three equal parts, and the density value for the point one-third of the way from the stained area was set as the binarization threshold.
f. Two or more adjacent pixels located side by side in the membrane cross section displayed in color by binarization were determined as a site where gold colloids were trapped.
g. As for the site where gold colloids were trapped, the distance in the membrane thickness direction between the position closest to the inner surface side and the position closest to the outer surface side was measured, which was regarded as the thickness of the gold-colloid trapping layer.

In Fig. 5B, the thickness of the gold-colloid trapping layer is the length of the arrow in the drawing.

(Measurement of Ratio a/b)

As for the hollow fiber membranes after the filtration test, a [the distance between the inner surface of the hollow fiber membrane and a position at the first trap layer (the trap layer for 20-nm gold colloids) closest to the outer surface] as well as b [the distance between the inner surface of the hollow fiber membrane and a position at the second trap layer (the trap layer for 30-nm gold colloids) closest to the outer surface] as described in the embodiment section were measured in the same manner as in the above-described binarization of a cross-sectional image of the hollow fiber membrane.
From the measured values of a and b, the ratio a/b was calculated.

<Virus-Removal Performance: LRV at Low pH>

By the procedure described below, LRV, indicating the virus-removal performance of the hollow fiber membrane in a low-pH liquid (pH5.2), was measured.

(Preparation of Test Liquid)

The pH of an aqueous solution containing phages was made to 5.2 to prepare a test liquid.

(Procedure)

(1) With the use of the hollow fiber membrane module prepared in the above manner, the test liquid was subjected to dead-end filtration (see Fig. 4), and the filtrate was collected.
(2) The filtrate thus collected was added to a medium, where Pseudomonas aeruginosa was cultured. If the filtrate contains phages, the number of Pseudomonas aeruginosa plaques would increase.
(3) After culturing for a certain period of time, the number of plaques was counted. From the number of plaques, the titer of the bacteria was determined, followed by calculation of the logarithmic reduction value (LRV) by the equation below.

$$LRV=\log_{10}(1\text{-(Titer of filtrate)/(Titer of test liquid)}$$

<Filtration Flow Rate: Throughput>

By the procedure described below, the filtration flow rate (throughput) of the hollow fiber membrane module per membrane area was measured.

(Preparation of Test Liquid)

An aqueous solution containing 0.5 mass% IVIG (antibody plasma product) and phages was prepared as a test liquid.

(Calculation of Membrane Area)

The total surface area (the membrane area) of the hollow fiber membrane module was determined based on the inner diameter of the hollow fiber membranes, by the equation below.

$$\text{Membrane area}=n\times\pi\times ID\times L$$

In the equation, n represents the number of hollow fiber membranes of the module, π represents the circular constant, ID represents the inner diameter [m] of the hollow fiber membranes, and L represents the effective length [m] of the hollow fiber membranes of the module.

(Procedure)

(1) With the use of the hollow fiber membrane module prepared in the above manner, the test liquid was subjected to dead-end filtration (see Fig. 4), and the filtrate was continuously collected.
(2) The total weight of the filtrate thus continuously collected was measured (monitored) continuously.
(3) From the difference between the total weight of the filtrate after a lapse of 59 minutes from the start and the same after a lapse of 60 minutes, and also from the above-mentioned membrane area, the filtration flow rate (throughput) per membrane area after a lapse of 60 minutes was calculated by the equation below.

Filtration flow rate=((Total weight of filtrate after 60 minutes)-(Total weight of filtrate after 59 minutes))/(Membrane area)

Table 2 shows the inner diameter, the outer diameter, and the membrane thickness of the hollow fiber membranes, the thickness of the trap layer for 20-nm gold colloids, the ratio a/b, LRV at low pH, and the filtration flow rate after a lapse of 60 minutes, all measured in the above-described manner.

[Table 2]

| | Dimension after spinning step | | | Dimension after drying | | | Thickness of trap layer for 20-nm gold colloids [μm] | a/b | LRV (at low pH) | Filtration flow rate (after 60 minutes) [mL/$m^2$/minute] |
|---|---|---|---|---|---|---|---|---|---|---|
| | Inner diameter [μm] | Membrane thickness [μm] | Outer diameter [μm] | Inner diameter [μm] | Membrane thickness [μm] | Outer diameter [μm] | | | | |
| Ex. 1 | 205 | 65 | 335 | 200 | 61 | 322 | 24 | 1.6 | 4.9 | 260 |
| Ex. 2 | 205 | 68 | 341 | 200 | 63 | 326 | 22 | 2.1 | 5.7 | 275 |
| Ex. 3 | 205 | 68 | 341 | 200 | 63 | 326 | 23 | 1.8 | 6.1 | 260 |
| Ex. 4 | 205 | 65 | 331 | 200 | 63 | 326 | 25 | 1.4 | 5.4 | 210 |
| Ex. 5 | 205 | 65 | 326 | 200 | 63 | 326 | 17 | 1.7 | 4.0 | 250 |
| Comp. Ex. 1 | 205 | 63 | 331 | 200 | 59 | 318 | 16 | 1.4 | 0.0 | 210 |
| Comp. Ex. 2 | - | - | - | 195 | 59 | 313 | 15 | 1.4 | 0.0 | 200 |
| Comp. Ex. 3 | - | - | - | 185 | 55 | 295 | 15 | 1.3 | 0.0 | 190 |

The results given in Table 2 indicate that when the thickness of the trap layer for 20-nm gold colloids reached 16.5 μm or more, LRV of the hollow fiber membrane module markedly increased. It is conceivable that when the thickness of the trap layer for 20-nm gold colloids is 20 μm or more, an LRV of 4.7 or more desirable as virus-removal performance can be achieved.

Moreover, from the a/b value and the filtration flow rate in Table 2, it is indicated that when the a/b value is 1.5 or more, over-time degradation of throughput can be eased and pre-clogging throughput can be increased.

REFERENCE SIGNS LIST

10a spinning dope, 10b internal liquid, 11 nozzle, 12, 13 in-liquid guide, 14, 15, 16 roller, 20 air gap, 21 coagulation liquid, 22 water bath, 23 take-up apparatus, 3 porous membrane (hollow fiber membrane), 4 larger component, 5 smaller component.

## Claims

**1.** A porous membrane having a structure that is non-uniform in a thickness direction, the structure comprising a first surface that is less dense and a second surface that is more dense, wherein

the porous membrane has a first trap layer (a trap layer for 20-nm gold colloids),
the first trap layer is a layer that traps gold colloids having an average particle size of 20 nm at the time when the gold colloids having an average particle size of 20 nm are made to permeate through the porous membrane from the first surface toward the second surface, and
the first trap layer has a thickness of 16.5 μm or more.

**2.** The porous membrane according to claim 1, wherein

the porous membrane has a second trap layer,
the second trap layer is a layer that traps gold colloids having an average particle size of 30 nm at the time when the gold colloids having an average particle size of 30 nm are made to permeate from the first surface toward the second surface, and
the porous membrane satisfies a relationship of a/b=1.5 or more, where
a is a distance between the first surface and a position at the first trap layer closest to the second surface, and
b is a distance between the first surface and a position at the second trap layer closest to the second surface.

**3.** The porous membrane according to claim 1 or 2, wherein

the porous membrane contains a hydrophobic polymer and a first hydrophilic polymer, and
a surface of the porous membrane is covered with a second hydrophilic polymer.

**4.** The porous membrane according to claim 3, wherein the hydrophobic polymer is a polysulfone-based polymer.

**5.** The porous membrane according to claim 3 or 4, wherein the first hydrophilic polymer is at least one of polyvinylpyrrolidone and vinylpyrrolidone-vinyl acetate copolymer.

**6.** The porous membrane according to any one of claims 3 to 5,
wherein the second hydrophilic polymer is a cellulose-based polymer.

**7.** The porous membrane according to any one of claims 1 to 6, in a form of a hollow fiber membrane, wherein
an inner surface of the hollow fiber membrane is the first surface and an outer surface of the hollow fiber membrane is the second surface.

**8.** The porous membrane according to any one of claims 1 to 7, for virus removal.

**9.** A purification method using the porous membrane according to any one of claims 1 to 8.

FIG.1

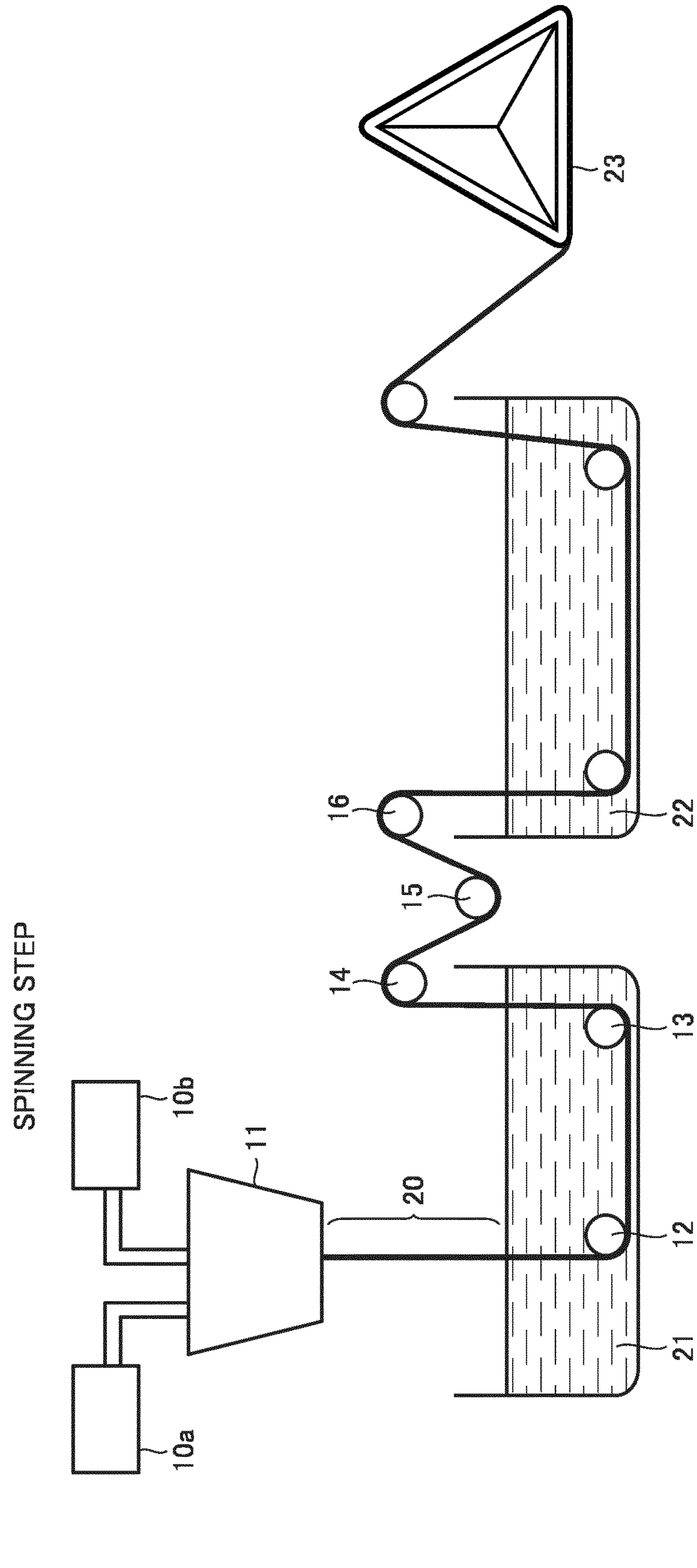

FIG.2

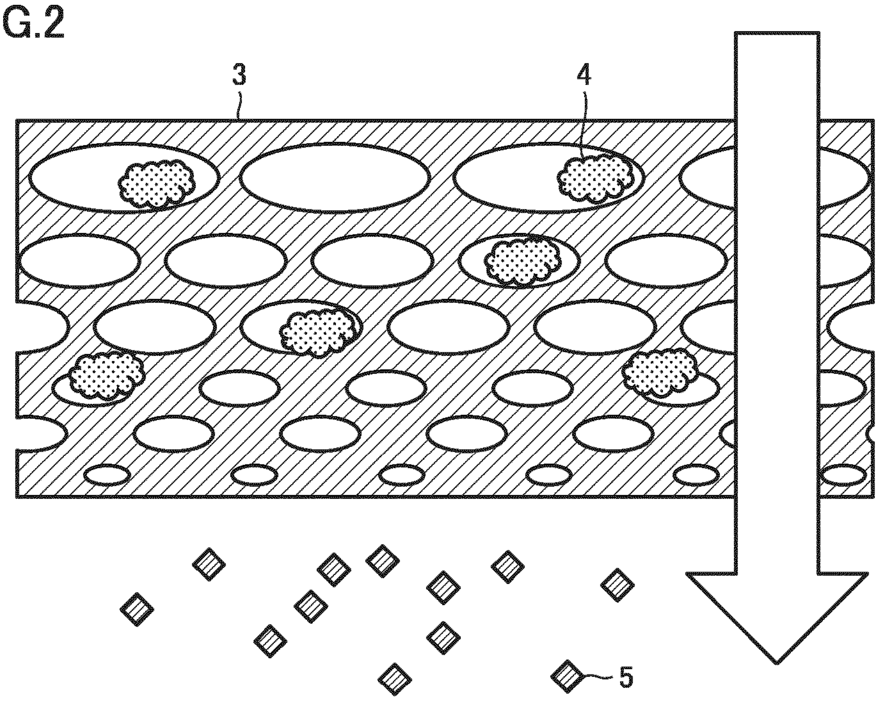

FIG.3

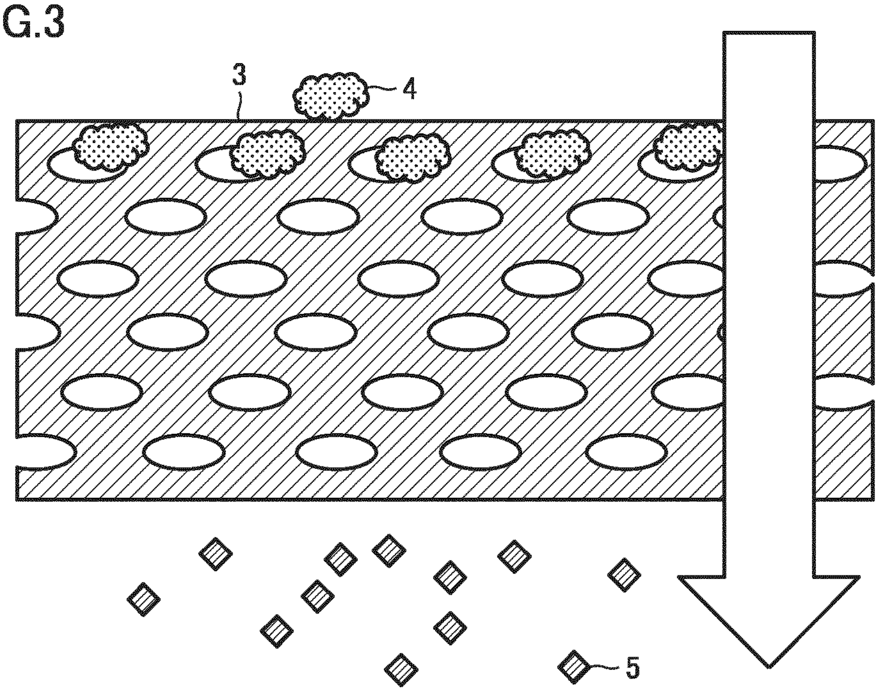

FIG.4

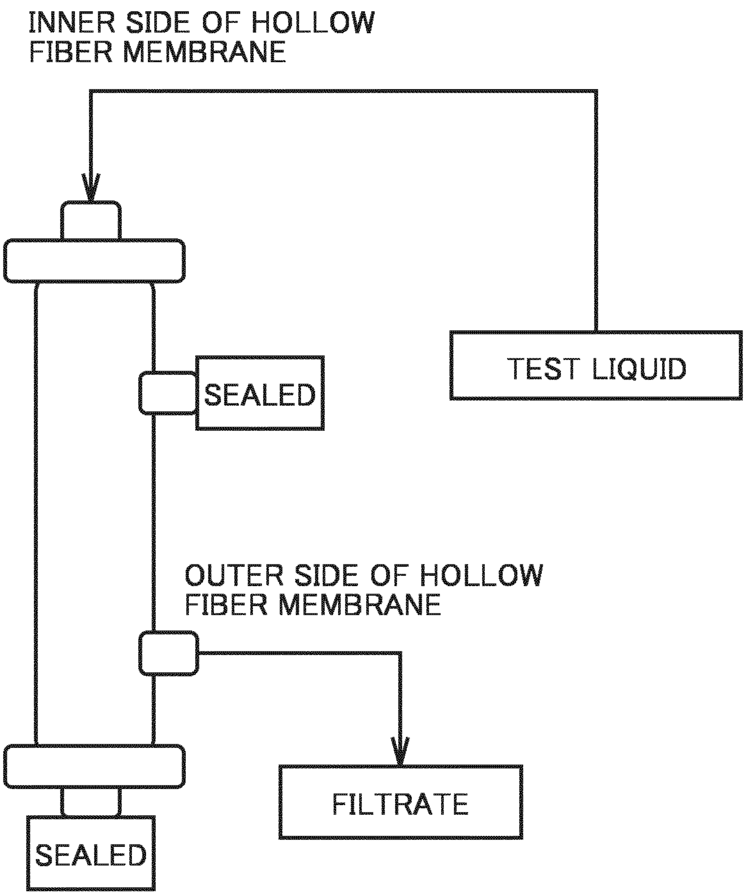
INNER SIDE OF HOLLOW
FIBER MEMBRANE
TEST LIQUID
SEALED
OUTER SIDE OF HOLLOW
FIBER MEMBRANE
FILTRATE
SEALED

FIG.5A

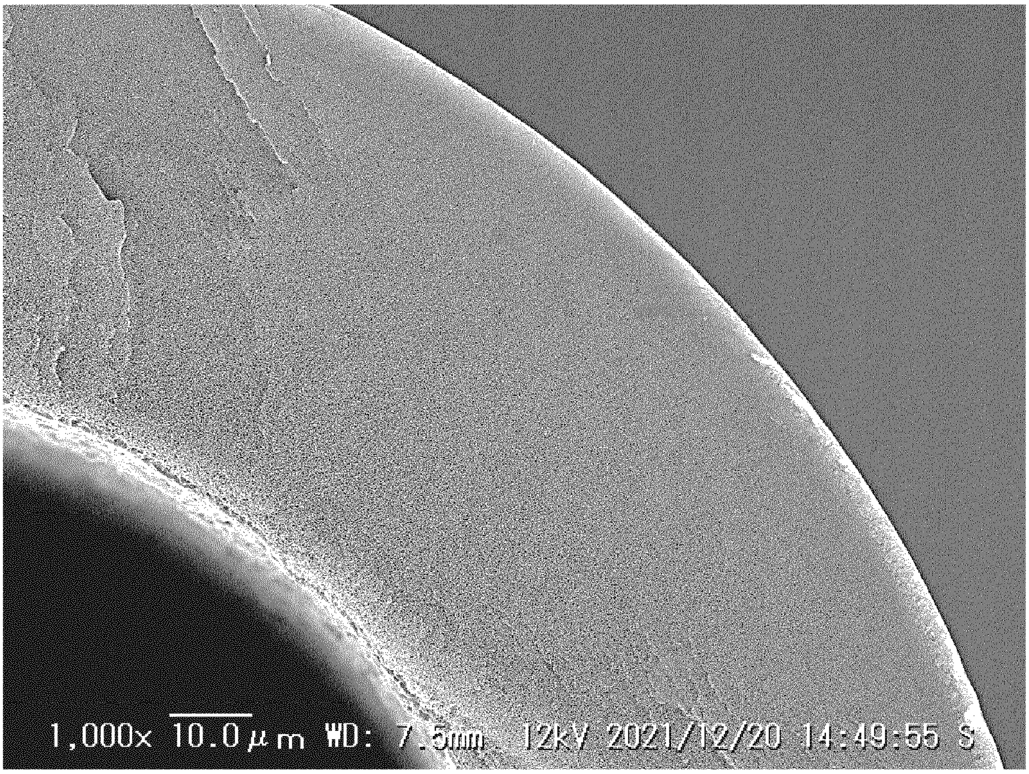


FIG.5B

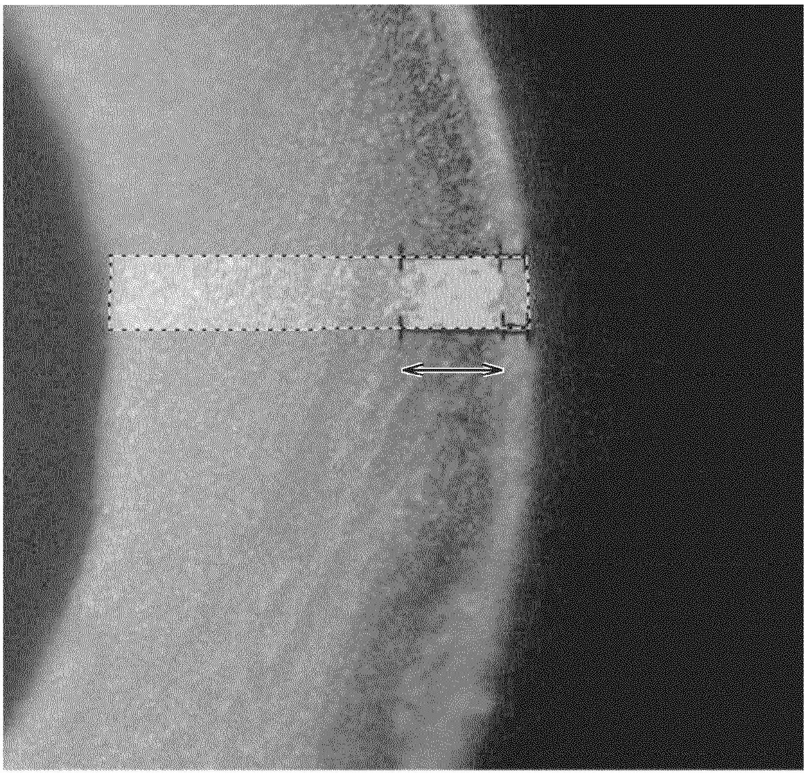

FIG.6

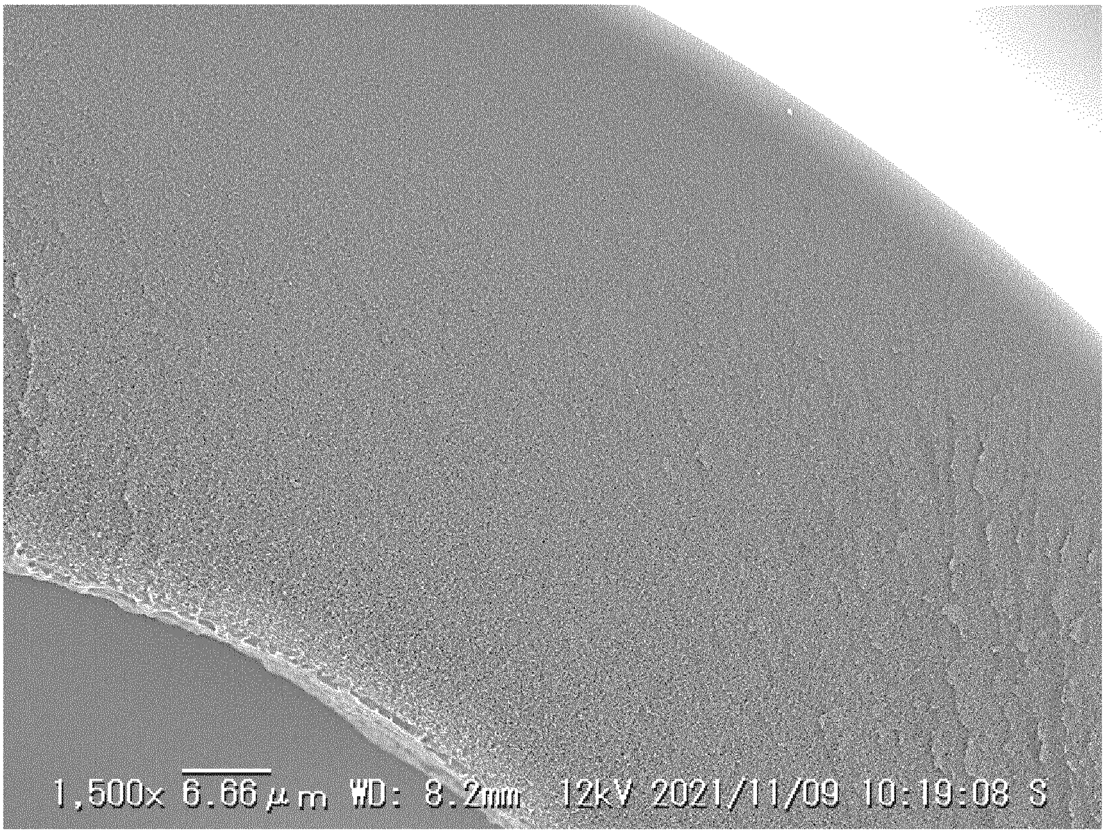

## INTERNATIONAL SEARCH REPORT

International application No.
**PCT/JP2023/044568**

**A. CLASSIFICATION OF SUBJECT MATTER**

***B01D 69/12***(2006.01)i; ***B01D 69/02***(2006.01)i; ***B01D 69/08***(2006.01)i; ***B01D 71/10***(2006.01)i; ***B01D 71/38***(2006.01)i; ***B01D 71/44***(2006.01)i; ***B01D 71/68***(2006.01)i

FI: B01D69/12; B01D71/68; B01D71/44; B01D71/10; B01D69/08; B01D71/38; B01D69/02

According to International Patent Classification (IPC) or to both national classification and IPC

**B. FIELDS SEARCHED**

Minimum documentation searched (classification system followed by classification symbols)

B01D69/12; B01D69/02; B01D69/08; B01D71/10; B01D71/38; B01D71/44; B01D71/68

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-97465 A (TOYOBO CO., LTD.) 29 May 2014 (2014-05-29) claims 1-2, paragraphs [0004], [0018], [0024]-[0026], [0061], [0121] | 1-9 |
| A | JP 2013-071100 A (TOYOBO CO., LTD.) 22 April 2013 (2013-04-22) claims 1-10, paragraphs [0028], [0103], fig. 1 | 1-9 |
| A | WO 2013/012024 A1 (TOYOBO CO., LTD.) 24 January 2013 (2013-01-24) claims 1-5, fig. 1 | 1-9 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 February 2024** | **05 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/044568**

| Patent document cited in search report | Publication date (day/month/year) | Patent family member(s) | Publication date (day/month/year) |
|---|---|---|---|
| JP 2014-97465 A | 29 May 2014 | US 2015/0232506 A1<br>claims 1-2, paragraphs [0004], [0029], [0037], [0038], [0079], [0156]<br>WO 2014/077095 A1<br>EP 2896451 A1 | |
| JP 2013-071100 A | 22 April 2013 | (Family: none) | |
| WO 2013/012024 A1 | 24 January 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5403444 B
- JP 2014097465 A


### Non-patent literature cited in the description


- **ODA MASAHIRO et al.** Issue and Case Study for Virus Clearance Study. *A PDA Journal of GMP and Validation in Japan*, 2005, vol. 7 (1)